# EUROPEAN PATENT APPLICATION

(11) **EP 4 645 103 A1**
(43) Date of publication of application: **05.11.2025**
(21) Application number: 24215679.2
(22) Date of filing: 27.11.2024
(51) Int. Cl.: G06F 13/38

(54) **DATA TRANSMISSION METHODS, ELECTRONIC DEVICES, AND WIRELESS COMMUNICATION DEVICES**

(30) Priority: 29.04.2024 CN 202410536165
(71) Applicant: Beijing Xiaomi Mobile Software Co., Ltd., Beijing 100085 (CN)
(72) Inventor: LIANG, Lei, Beijing, 100085 (CN)
(74) Representative: Dehns Germany Partnerschaft mbB

(57) **Abstract**

The present disclosure provides a data transmission method, an electronic device, and a wireless communication device. The electronic device includes a housing and a wireless communication module, the housing being provided with no data transmission interface, where the wireless communication module is configured to establish a wireless connection channel with an external wireless communication device, the wireless connection channel being configured to transmit signals for a signal line of the electronic device and a signal line of the wireless communication device; the wireless communication module is further configured to establish a USB transmission channel upon successful establishment of the wireless connection channel; and the wireless communication module is further configured to transmit USB data via the USB transmission channel.

## Description

### TECHNICAL FIELD

The present disclosure relates to the field of communication technology and, in particular, to a data transmission method, an electronic device, and a wireless communication device.

### BACKGROUND

At present, most electronic devices are equipped with USB (Universal Serial Bus) Type-C ports, which are used for high-power charging or data transmission to improve the performance of the electronic devices.

In the related art, liquids such as water droplets or sweat can enter the USB Type-C ports of the electronic devices. Due to a possible voltage difference between adjacent pins of the USB Type-C port and the fact that the aforementioned liquid can act as an electrolyte, an electrochemical corrosion scenario can be formed, resulting in a consistently high corrosion failure rate of the Type-C ports, which affects the usage experience of the electronic devices.

### SUMMARY

The present disclosure provides a data transmission method, an electronic device, and a wireless communication device, to solve the above technical problems.

According to a first aspect of the present disclosure, there is provided an electronic device, including a housing and a wireless communication module, the wireless communication module being provided within the housing, and the housing being provided with no data transmission interface, where the wireless communication module is configured to establish a wireless connection channel with an external wireless communication device, the wireless connection channel being configured to transmit signals for a signal line of the electronic device and a signal line of the wireless communication device; the wireless communication module is further configured to establish a USB transmission channel upon successful establishment of the wireless connection channel; and the wireless communication module is further configured to transmit USB data via the USB transmission channel.

Optionally, the wireless communication module includes a wireless data transmission unit, a first differential signal line, and a second differential signal line, the wireless data transmission unit being electrically connected to the first differential signal line and the second differential signal line, where the wireless data transmission unit is configured to transmit a detection signal for detecting a peer transmission unit at a distance from the wireless data transmission unit less than or equal to a preset distance threshold; and the wireless data transmission unit is further configured to establish the wireless connection channel with the peer transmission unit in response to receiving a response signal returned by the peer transmission unit, the wireless connection channel being configured to transmit and receive signals for the first differential signal line of the wireless communication module and a first differential signal line of the peer transmission unit, and to transmit and receive signals for the second differential signal line of the wireless communication module and a second differential signal line of the peer transmission unit.

Optionally, the wireless data transmission unit includes a wireless data transmission chip, which has a first data pin electrically connected to the first differential signal line of the wireless communication module, and a second data pin electrically connected to the second differential signal line of the wireless communication module.

Optionally, the wireless data transmission unit further includes a level conversion chip, which has a first pin electrically connected to the first data pin of the wireless data transmission chip, a second pin electrically connected to the second data pin of the wireless data transmission chip, a third pin electrically connected to the first differential signal line of the wireless communication module, and a fourth pin electrically connected to the second differential signal line of the wireless communication module.

Optionally, the electronic device further includes a control module electrically connected to the wireless communication module, and configured to configure the wireless communication module and to control establishment of the USB transmission channel.

Optionally, the control module includes a first controller, which has a first data pin electrically connected to the first differential signal line of the wireless communication module, a second data pin electrically connected to the second differential signal line of the wireless communication module, a first communication pin electrically connected to the wireless data transmission chip, and a configuration pin electrically connected to the wireless data transmission chip.

Optionally, the first controller further includes a USB mode trigger pin, the wireless data transmission chip further includes a USB mode trigger pin, and the USB mode trigger pin of the first controller is electrically connected to the USB mode trigger pin of the wireless data transmission chip; the wireless data transmission chip is configured to output a USB mode trigger signal via the USB mode trigger pin thereof in response to detecting a peer wireless data transmission chip; and the first controller is configured to establish the USB transmission channel with the wireless data transmission chip in response to receiving the USB mode trigger signal, to transmit the USB data via the USB transmission channel.

Optionally, the electronic device further includes a first switching unit, which has a control pin electrically connected to the first controller, and a first terminal electrically connected to a power supply module of the electronic device; the first controller is further configured to output a first switching control signal upon the successful establishment of the wireless connection channel and successful establishment of a charging and discharging circuit; and the first switching unit is configured to switch to an on state upon receiving the first switching control signal to enable a second terminal of the first switching unit to output a preset voltage signal.

Optionally, the electronic device further includes a voltage adjustment unit, which has a first input terminal electrically connected to the second terminal of the first switching unit, and a second input terminal electrically connected to the power supply module, the voltage adjustment unit being configured to adjust an amplitude of the preset voltage signal output from the first switching unit to obtain an updated preset voltage signal.

Optionally, the electronic device further includes a power management unit, which has a power pin electrically connected to the second terminal of the first switching unit, a first data pin electrically connected to the first differential signal line of the wireless communication module, and a second data pin electrically connected to the second differential signal line of the wireless communication module; and the power management unit is configured to transmit and receive signals via the wireless connection channel to establish the USB transmission channel in response to detecting the preset voltage signal by the power pin.

Optionally, the electronic device further includes a power supply module, which includes at least one of a wireless charging module or a battery module, the power supply module being electrically connected to the wireless communication module to supply power to the wireless communication module.

Optionally, the wireless charging module includes a wireless coil and a wireless unit, the wireless coil being electrically connected to the wireless unit, and the wireless unit being electrically connected to a first pin of a first switching unit in the wireless communication module and the battery module; and the wireless unit is configured to output wireless power to or receive the wireless power from the wireless coil based on configuration data.

According to a second aspect of the present disclosure, there is provided a wireless communication device, including a housing, a USB communication interface and a wireless communication module, the USB communication interface being provided on the housing and electrically connected to the wireless communication module, and the USB communication interface being configured to be electrically connected to a third device which is a PC device or an OTG device, where the wireless communication module is configured to establish a wireless connection channel with an electronic device, the wireless connection channel being configured to transmit and receive signals for a signal line of the wireless communication device and a signal line of the electronic device; the wireless communication module is further configured to establish a USB transmission channel upon successful establishment of the wireless connection channel; and the wireless communication module is further configured to transmit USB data for the third device or the electronic device via the USB transmission channel.

Optionally, the wireless communication module includes a wireless data transmission unit, a first differential signal line, and a second differential signal line, the wireless data transmission unit being electrically connected to the first differential signal line and the second differential signal line, where the wireless data transmission unit is configured to transmit a detection signal for detecting a peer transmission unit at a distance from the wireless data transmission unit less than or equal to a preset distance threshold, the peer transmission unit being included in the electronic device; and the wireless data transmission unit is further configured to establish the wireless connection channel with the peer transmission unit in response to receiving a response signal returned by the peer transmission unit, the wireless connection channel being configured to transmit and receive signals for the first differential signal line of the wireless communication module and a first differential signal line of the peer transmission unit, and to transmit and receive signals for the second differential signal line of the wireless communication module and a second differential signal line of the peer transmission unit.

Optionally, the wireless data transmission unit includes a wireless data transmission chip, which has a first data pin electrically connected to the first differential signal line of the wireless communication module, and a second data pin electrically connected to the second differential signal line of the wireless communication module.

Optionally, the wireless data transmission unit further includes a level conversion chip, which has a first pin electrically connected to the first data pin of the wireless data transmission chip, a second pin electrically connected to the second data pin of the wireless data transmission chip, a third pin electrically connected to the first differential signal line of the wireless communication module, and a fourth pin electrically connected to the second differential signal line of the wireless communication module.

Optionally, the wireless communication device further includes a control module electrically connected to the wireless communication module, and configured to configure the wireless communication module and to control establishment of the USB transmission channel.

Optionally, the control module includes a second controller, which has a first communication pin electrically connected to the wireless data transmission chip, and a configuration pin electrically connected to the wireless data transmission chip.

Optionally, the wireless communication module further includes a second switching unit, which has a control pin electrically connected to the second controller, a first terminal electrically connected to a power pin of the USB communication interface, and a second terminal electrically connected to a power module of the wireless communication device; the second controller is further configured to output a second switching control signal upon the successful establishment of the wireless connection channel and successful establishment of a charging and discharging circuit; and the second switching unit is configured to switch to an on state upon receiving the second switching control signal to enable the first terminal of the second switching unit to output a preset voltage signal to the power pin of the USB communication interface.

Optionally, the second switching unit is further configured to transmit the preset voltage signal at the first terminal of the second switching unit to the power module.

Optionally, the second controller further includes a USB mode trigger pin, the wireless data transmission chip further includes a USB mode trigger pin, and the USB mode trigger pin of the second controller is electrically connected to the USB mode trigger pin of the wireless data transmission chip; the wireless data transmission chip is configured to output a USB mode trigger signal via the USB mode trigger pin thereof in response to detecting a peer wireless data transmission chip; and the second controller is configured to establish the USB transmission channel with the wireless data transmission chip in response to receiving the USB mode trigger signal, to transmit the USB data via the USB transmission channel.

Optionally, the wireless communication module further includes a protocol chip, which has a first data pin electrically connected to the first differential signal line of the wireless communication module, a second data pin electrically connected to the second differential signal line of the wireless communication module, a configuration pin electrically connected to a configuration pin of the USB communication interface, and a communication pin electrically connected to a second communication pin of the second controller.

Optionally, the wireless communication device further includes a power supply module, which includes at least one of a wireless charging module or a power module, the power supply module being electrically connected to the wireless communication module to supply power to the wireless communication module.

Optionally, the wireless charging module includes a wireless coil and a wireless unit, the wireless coil being electrically connected to the wireless unit, and the wireless unit being electrically connected to a second pin of a second switching unit in the wireless communication module and the power module.

According to a third aspect of the present disclosure, there is provided a data transmission method, applicable to an electronic device, which includes a housing and a wireless communication module, the wireless communication module being provided within the housing, and the housing being provided with no data transmission interface; the method including: establishing, by the wireless communication module, a wireless connection channel with an external wireless communication device, the wireless connection channel being configured to transmit signals for a signal line of the electronic device and a signal line of the wireless communication device; establishing, by the wireless communication module, a USB transmission channel upon successful establishment of the wireless connection channel; and transmitting, by the wireless communication module, USB data via the USB transmission channel.

Optionally, establishing, by the wireless communication module, the wireless connection channel with the external wireless communication device, includes: transmitting a detection signal for detecting a peer transmission unit at a distance from the wireless communication module less than or equal to a preset distance threshold; and establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit.

Optionally, establishing, by the wireless communication module, the USB transmission channel upon the successful establishment of the wireless connection channel, includes: outputting a first switching control signal upon the successful establishment of the wireless connection channel and successful establishment of a charging and discharging circuit; switching a first switching unit of the electronic device to an on state upon receiving the first switching control signal to enable a second terminal of the first switching unit to output a preset voltage signal; and transmitting and receiving signals via the wireless connection channel to establish the USB transmission channel in response to detecting the preset voltage signal by a power pin.

According to a fourth aspect of the present disclosure, there is provided a data transmission method, applicable to a wireless communication device, which includes a housing, a USB communication interface and a wireless communication module, the USB communication interface being provided on the housing and electrically connected to the wireless communication module, and the USB communication interface being configured to be electrically connected to a third device which is a PC device or an OTG device, the method including: establishing, by the wireless communication module, a wireless connection channel with an electronic device, the wireless connection channel being configured to electrically connect a signal line of the wireless communication device and a signal line of the electronic device; establishing, by the wireless communication module, a USB transmission channel upon successful establishment of the wireless connection channel; and transmitting, by the wireless communication module, USB data for the third device or the electronic device via the USB transmission channel.

Optionally, establishing, by the wireless communication module, the wireless connection channel with the electronic device, includes: transmitting a detection signal for detecting a peer transmission unit at a distance from the wireless communication module less than or equal to a preset distance threshold, the peer transmission unit being a wireless data transmission unit of the electronic device; and establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit.

Optionally, establishing, by the wireless communication module, the USB transmission channel upon the successful establishment of the wireless connection channel, includes: outputting a second switching control signal upon the successful establishment of the wireless connection channel and successful establishment of a charging and discharging circuit; switching a second switching unit of the wireless communication device to an on state upon receiving the second switching control signal to enable a first terminal of the second switching unit to output a preset voltage signal to a power pin of the USB communication interface; and transmitting a USB handshake signal via the wireless connection channel to enable the electronic device to establish the USB transmission channel with the third device.

According to a fifth aspect of the present disclosure, there is provided a data transmission apparatus, applicable to an electronic device, which includes a housing and a wireless communication module, the wireless communication module being provided within the housing, and the housing being provided with no data transmission interface, the apparatus including: a USB transmission channel establishment module, configured to establish a USB transmission channel upon successful establishment of a wireless connection channel; and a USB data transmission module, configured to transmit USB data via the USB transmission channel.

According to a sixth aspect of the present disclosure, there is provided a data transmission apparatus, applicable to a wireless communication device, which includes a housing, a USB communication interface and a wireless communication module, the USB communication interface being provided on the housing and electrically connected to the wireless communication module, and the USB communication interface being configured to be electrically connected to a third device which is a PC device or an OTG device, the apparatus including: a USB transmission channel establishment module, configured to establish a USB transmission channel upon successful establishment of a wireless connection channel; and a USB data transmission module, configured to transmit USB data for the third device or an electronic device via the USB transmission channel.

According to a seventh aspect of the present disclosure, there is provided an electronic device, including: a processor; and a memory for storing a computer program executable by the processor; where the processor is configured to execute the computer program in the memory to implement the method in the third aspect.

According to an eighth aspect of the present disclosure, there is provided a wireless communication device, including: a processor; and a memory for storing a computer program executable by the processor; where the processor is configured to execute the computer program in the memory to implement the method in the fourth aspect.

According to a ninth aspect of the present disclosure, there is provided a computer-readable storage medium, where an executable computer program in the storage medium, when executed by a processor, is capable of implementing the method in the third aspect or in the fourth aspect.

The technical solutions according to the embodiments of the present disclosure can provide the following beneficial effects.

The electronic device according to the present disclosure includes a housing and a wireless communication module, the wireless communication module being provided within the housing, and the housing being provided with no data transmission interface, where the wireless communication module is configured to establish a wireless connection channel with an external wireless communication device, the wireless connection channel being configured to transmit signals for a signal line of the electronic device and a signal line of the wireless communication device; the wireless communication module is further configured to establish a USB transmission channel upon successful establishment of the wireless connection channel; and the wireless communication module is further configured to transmit USB data via the USB transmission channel. In this way, the present disclosure transmits the USB data wirelessly, eliminating the need to provide a data transmission interface for the electronic device, and avoiding failure to transmit the USB data due to corrosion or damage to the data transmission interface, which is conducive to improving the user experience. Moreover, the elimination of a data transmission interface from the electronic device facilitates the realization of a holeless electronic device.

It should be understood that the above general description and the following detailed description are exemplary and explanatory only, and are not intended to limit the present disclosure.

### BRIEF DESCRIPTION OF DRAWINGS

FIG. 1 is a block diagram of an electronic device according to an embodiment of the present disclosure.
FIG. 2 is a block diagram of an electronic device according to another embodiment of the present disclosure.
FIG. 3 is a block diagram of an electronic device according to yet another embodiment of the present disclosure.
FIG. 4 is a block diagram of an electronic device according to still another embodiment of the present disclosure.
FIG. 5 is a block diagram of a wireless communication device according to an embodiment of the present disclosure.
FIG. 6 is a block diagram of a wireless communication device according to another embodiment of the present disclosure.
FIG. 7 is a block diagram of a wireless communication device according to yet another embodiment of the present disclosure.
FIG. 8 is a block diagram of an application scenario according to an embodiment of the present disclosure.
FIG. 9 is a block diagram of an application scenario according to another embodiment of the present disclosure.
FIG. 10 is a flowchart of a data transmission method according to an embodiment of the present disclosure.
FIG. 11 is a block diagram of an electronic device according to an embodiment of the present disclosure.

### DETAILED DESCRIPTION

Exemplary embodiments will be described herein in detail, examples of which are represented in the accompanying drawings. When the following description relates to the accompanying drawings, the same numerals in the different drawings indicate the same or similar elements unless otherwise indicated. Embodiments described in the following exemplary embodiments do not represent all embodiments consistent with the present disclosure. Rather, they are merely examples of apparatuses consistent with some aspects of the present disclosure as detailed in the appended claims.

In order to solve the above technical problems, embodiments of the present disclosure provide a data transmission method, an electronic device, and a wireless communication device, where USB data is transmitted in a wireless transmission manner so as to save USB data transmission interfaces. This can avoid failure to transmit the USB data due to corrosion or damage to the USB data transmission interface, which further facilitates the realization of a holeless design for the electronic device, and enhances the reliability and aesthetics of the electronic device.

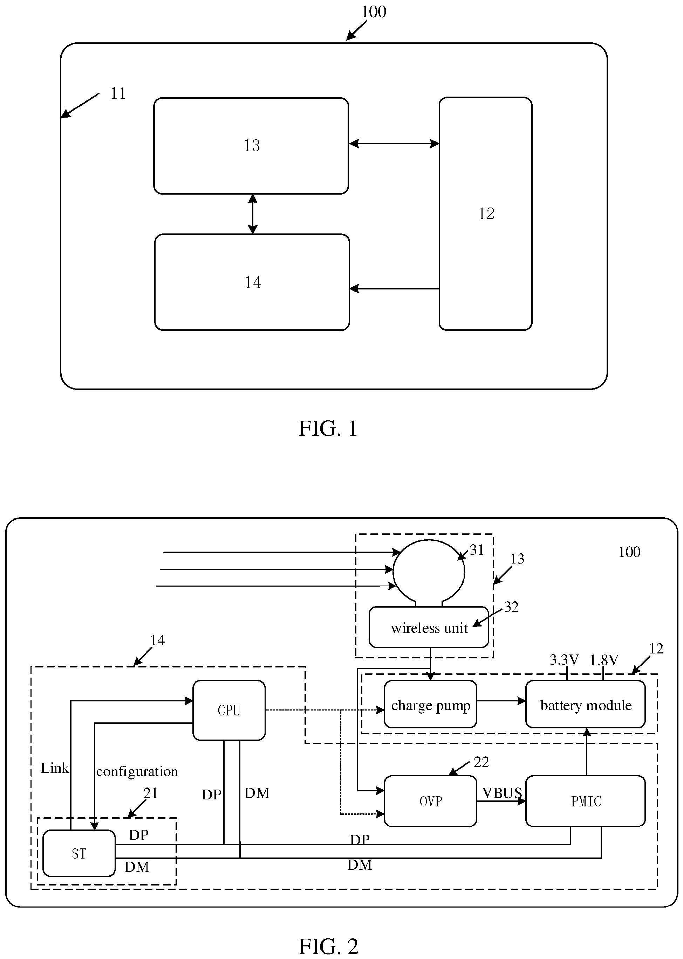

FIG. 1 is a schematic structural diagram of an electronic device according to an embodiment of the present disclosure. Referring to FIG. 1, an electronic device 100 includes a housing 11 and a wireless communication module 14. The wireless communication module 14 is provided within the housing 11, and the housing 11 is provided with no data transmission interface. The wireless communication module 14 is configured to establish a wireless connection channel with an external wireless communication device 200, the wireless connection channel being configured to transmit signals for a signal line of the electronic device 100 and a signal line of the wireless communication device 200; the wireless communication module 14 is further configured to establish a USB transmission channel upon successful establishment of the wireless connection channel; and the wireless communication module 14 is further configured to transmit USB data via the USB transmission channel.

In an embodiment, the electronic device 100 includes a power supply module, which includes at least one of a battery module 12 or a wireless charging module 13. The power supply module can supply power to the wireless communication module 14. In an example, the power supply module of the electronic device includes the battery module 12 and the wireless charging module 13, such that the wireless charging module 13 can be used to charge the battery module 12. The above-mentioned battery module 12 may include at least one battery cell, as well as a voltage conversion circuit such as a charge pump or an inverter circuit, so as to adapt to a voltage conversion relationship between the battery cell and a load.

It should be noted that the wireless connection channel mentioned above serves to transmit and receive signals for signal lines (e.g., a first differential signal line DP and a second differential signal line DM) within the electronic device 100 and signal lines (e.g., a first differential signal line DP and a second differential signal line DM) within the wireless communication device 200 in a wireless transmission manner. It can be considered that the first differential signal line DP of the electronic device 100 is physically connected to the first differential signal line DP of the wireless communication device 200, and that the second differential signal line DP of the electronic device 100 is physically connected to the second differential signal line DP of the wireless communication device 200. In other words, the above-mentioned wireless connection channel is equivalent in the related art to inserting a data transmission interface of an external device into a data transmission interface of the electronic device to establish a physical connection therebetween.

In an embodiment, referring to FIG. 2, the wireless communication module 14 includes a wireless data transmission unit 21, a first differential signal line DP, and a second differential signal line DM. The wireless data transmission unit 21 is electrically connected to the first differential signal line DP and the second differential signal line DM. The wireless data transmission unit 21 is configured to transmit a detection signal upon power-on, the detection signal being configured to detect a peer transmission unit at a distance from the wireless data transmission unit 21 less than or equal to a preset distance threshold, where the preset distance threshold can be set according to specific scenarios, for example, the preset distance threshold may be 1cm to 5cm.

The wireless data transmission unit 21 is further configured to establish the wireless connection channel with the peer transmission unit in response to receiving a response signal returned by the peer transmission unit. The wireless connection channel involves the wireless data transmission unit and the peer transmission unit, which can perform data transmission therebetween in a wireless communication manner, achieving the effect of keeping a connection between the first differential signal line DP of the electronic device and the first differential signal line DP of the wireless communication device, and keeping a connection between the second differential signal line DM of the electronic device and the second differential signal line DM of the wireless communication device. This is equivalent to allowing the electronic device to form a physical connection with the wireless communication device. In other words, the aforementioned wireless connection channel forms the physical basis for subsequent data transmission.

In an example, with continued reference to FIG. 2, the wireless data transmission unit 21 includes a wireless data transmission chip ST. The wireless data transmission chip ST has a first data pin electrically connected to the first differential signal line DP of the wireless communication module 14, and a second data pin electrically connected to the second differential signal line DM of the wireless communication module 14. In this way, signals and/or data transmitted by the first differential signal line DP and the second differential signal line DM can be sent to the wireless data transmission chip ST, or the first differential signal line DP and the second differential signal line DM can receive signals and/or data transmitted by the wireless data transmission chip ST.

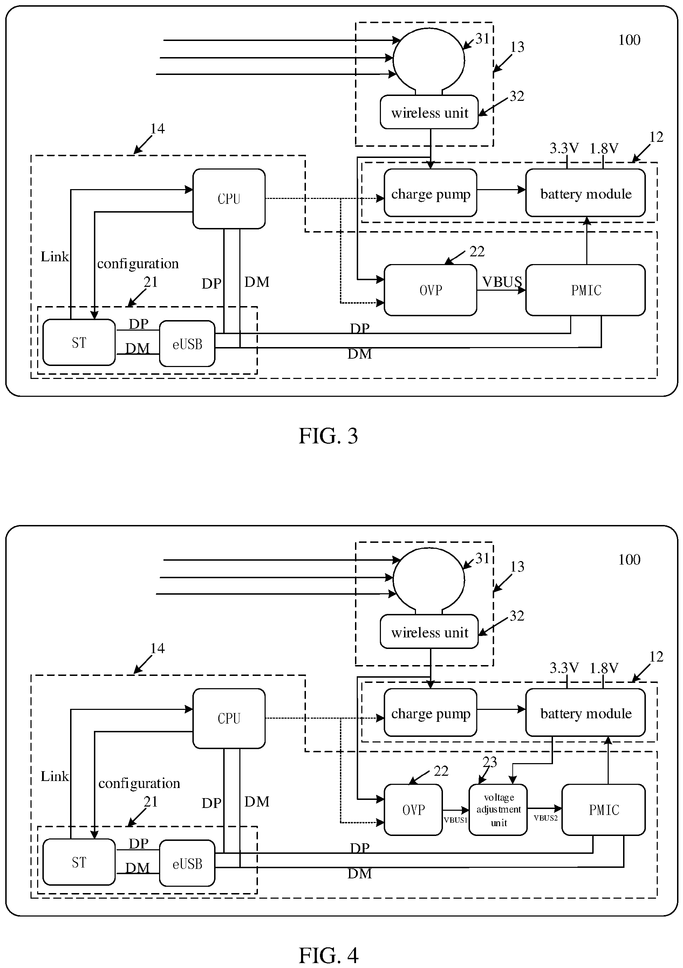

In another example, referring to FIG. 3, the wireless data transmission unit 21 further includes a level conversion chip eUSB. The level conversion chip eUSB includes: a first pin electrically connected to the first data pin of the wireless data transmission chip ST, to transmit signals on the first differential signal line DP; a second pin electrically connected to the second data pin of the wireless data transmission chip ST, to transmit signals on the second differential signal line DM; a third pin electrically connected to the first differential signal line DP; and a fourth pin electrically connected to the second differential signal line DM. In this way, the level conversion chip eUSB in this example can perform level conversion on the data transmitted by the wireless data transmission chip ST and/or the differential signal line DP/DM, thereby meeting the requirements of the wireless data transmission chip ST, the subsequent power management unit PMIC, or first controller CPU.

In an embodiment, the electronic device includes a control module. The control module is electrically connected to the wireless communication module and is configured to configure the wireless communication module and to control establishment of the USB transmission channel. The control module can be implemented as a separately provided controller, such as a microcontroller, a digital processing chip, or a circuit with control functions. The control module includes a first controller. In order to minimize modifications to the structure of the electronic device, the first controller can also be implemented as a processor CPU of the electronic device. Corresponding schemes, which can realize corresponding functions, fall within the scope of protection of the present disclosure.

For convenience of description, the subsequent embodiments will be described with the first controller implemented as a processor CPU, for example. In an embodiment, with continued reference to FIG. 2 or FIG. 3, the first controller CPU includes: a first data pin electrically connected to the first differential signal line DP; a second data pin electrically connected to the second differential signal line DM; a first communication pin electrically connected to the wireless data transmission chip ST; and a configuration pin electrically connected to the wireless data transmission chip ST. In this way, the first controller CPU can transmit and receive the USB data via the first differential signal line DP and the second differential signal line DM. The first controller CPU can configure the wireless data transmission chip ST via the configuration pin, such as an operating frequency, modulation mode, transmit/receive power, and type of data transmitted of the wireless data transmission chip ST. The first controller CPU can also receive, via the first communication pin, a channel establishment success signal Link, which is generated by the wireless data transmission chip ST upon successful establishment of the wireless connection channel.

In an embodiment, with continued reference to FIG. 2 or FIG. 3, the electronic device further includes a first switching unit 22. The first switching unit 22 includes: a control pin electrically connected to the first controller CPU; and a first terminal electrically connected to the wireless charging module 13. The first controller CPU is further configured to output a first switching control signal upon the successful establishment of the wireless connection channel and successful establishment of a charging and discharging circuit. The first switching unit 22 is configured to switch to an on state upon receiving the first switching control signal, to enable a second terminal of the first switching unit 22 to output a preset voltage signal VBUS. In this embodiment, establishment of the USB transmission channel can be triggered by the preset voltage signal VBUS output from the first switching unit 22. In other words, the preset voltage signal is equivalent to providing a function similar to a power signal (i.e. VBUS) from a USB data transmission interface, which can ensure the timing of USB data transmission in various embodiments of the present disclosure.

In an embodiment, with continued reference to FIG. 2 or FIG. 3, the electronic device further includes a power management unit PMIC. The power management unit PMIC includes: a power pin electrically connected to the second terminal of the first switching unit 22; a first data pin electrically connected to the first differential signal line DP; and a second data pin electrically connected to the second differential signal line DM. In this way, the power management unit PMIC is configured to transmit and receive signals via the wireless connection channel to establish the USB transmission channel in response to detecting the preset voltage signal VBUS by the power pin. In this embodiment, the preset voltage signal VBUS output from the first switching unit 22 matches the signal required by the power management unit PMIC to ensure the normal operation of the power management unit PMIC, that is, to enable communication between the first switching unit 22 and the power management unit PMIC without adding hardware.

In an embodiment, the electronic device further includes a voltage adjustment unit 23. Referring to FIG. 4, the voltage adjustment unit 23 includes: a first input terminal electrically connected to the second terminal of the first switching unit 22; and a second input terminal electrically connected to the battery module. The voltage adjustment unit 23 is configured to adjust an amplitude of a preset voltage signal VBUS1 output from the first switching unit 22, to obtain an updated preset voltage signal VBUS2. In this way, the voltage adjustment unit 23 can adjust the preset voltage signal VBUS1 and output the adjusted preset voltage signal VBUS2, thereby meeting the operational requirements of different types of power management units PMIC.

In an embodiment, the electronic device further includes a DC-DC converter circuit, which is connected in series between the voltage adjustment unit 23 and the power management unit PMIC, to convert the signal VBUS2 output from the voltage adjustment unit 23 into a signal VBUS3 required by the power management unit PMIC, thereby meeting the requirements of the power management unit.

In an embodiment, the wireless data transmission chip ST further includes a USB mode trigger pin, the first controller further includes a USB mode trigger pin, and the USB mode trigger pin of the first controller is electrically connected to the USB mode trigger pin of the wireless data transmission chip. The wireless data transmission chip is configured to output a USB mode trigger signal via the USB mode trigger pin thereof in response to detecting a peer wireless data transmission chip. The first controller is configured to establish the USB transmission channel with the wireless data transmission chip in response to receiving the USB mode trigger signal, to transmit the USB data via the USB transmission channel. In this way, when the electronic device is placed on or near the wireless communication device, the first controller can be triggered by the wireless data transmission chip ST to establish the USB transmission channel directly without the need for the power management unit PMIC to establish the USB transmission channel, minimizing the modifications to the electronic device.

In an example, when the electronic device serves as a Device, the power management unit PMIC can actively initiate USB protocol identification, such as BC1.2 protocol identification. For example, the power management unit PMIC can, upon detecting a preset voltage signal equivalent to detecting an external device inserted into a USB data transmission interface, send SEO to the USB bus to reset the USB bus for a duration no less than 2.5ms. The wireless communication device, upon detecting SEO on the USB bus for a duration no less than 2.5ms, sends a K signal to the USB bus for a duration no less than 1ms and no more than 7ms. After the wireless communication device sends the K signal, the USB bus may restore to the SE0 state. If the wireless communication device/electronic device supports high-speed transmission mode, it must respond within 100ms after the end of the K signal. When the wireless communication device/electronic device supports high-speed transmission mode, it may send continuous K/J signals to the USB bus, where a width of each K/J signal is no less than 40ms and no more than 60ms, and an interval between every two adjacent K/J signals is no more than 2.5ms. Upon at least three consecutive pairs of K/J signals are detected, a pull-up resistor on the first differential signal line DP must be disconnected, and high-speed terminating resistors to ground on the first differential signal line DP and the second differential signal line DM must be connected within 500ms to complete high-speed handshake and establish the USB transmission channel. At this time, high-speed transmission mode can be performed.

In another example, the electronic device serves as a HOST and is used with the wireless communication device HUB. At this point, the third device (OTG) connected to the wireless communication device HUB actively initiates the establishment of the USB transmission channel. Please refer to the above contents for details, which will not be repeated herein.

In an embodiment, with continued reference to FIG. 2 and FIG. 3, the wireless charging module 13 includes a wireless coil 31 and a wireless unit 32. The wireless coil 31 is electrically connected to the wireless unit 32. The wireless unit 32 is electrically connected to a first pin (i.e., the first terminal) of the first switching unit 22 in the wireless communication module 14 and the battery module 12. In this way, the wireless unit 32 can output wireless power to the wireless coil 31 or receive wireless power from the wireless coil 31 based on configuration data. In other words, the first pin of the first switching unit 22 is electrically connected to the battery module 12 and the wireless unit 32, respectively. When powered by the battery module 12 and/or the wireless unit 32, the first pin of the first switching unit 22 is always in a high-level state, preparing for the output of the preset voltage signal.

It can be understood that when the battery module 12 of the electronic device completes or stops discharging, the electronic device 100 can be powered by the wireless communication device 200 via the wireless charging module 13, or when the electronic device is configured for reverse charging, the electronic device 100 can provide power from the battery module 12 to the wireless communication device 200 via the wireless charging module 13. The process of establishing a connection for wireless charging can be found in the related art, and will not be repeated herein.

Thus, this embodiment transmits the USB data wirelessly, eliminating the need to provide a data transmission interface for the electronic device, and avoiding failure to transmit the USB data due to corrosion or damage to the data transmission interface, which is conducive to improving the user experience. Moreover, the elimination of a data transmission interface from the electronic device facilitates the realization of a holeless electronic device.

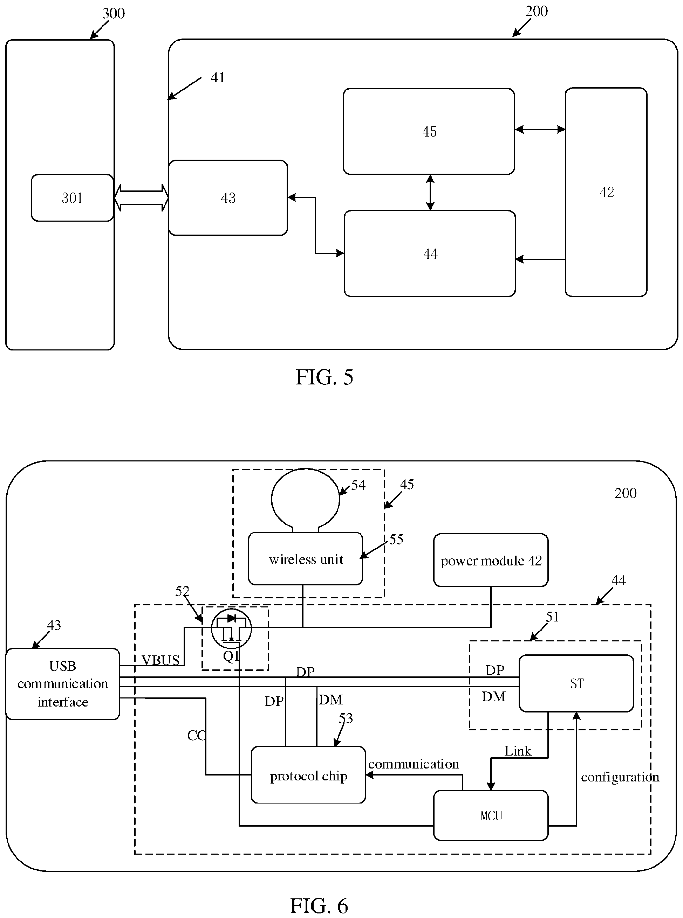

Embodiments of the present disclosure further provide a wireless communication device. FIG. 5 is a schematic structural diagram of a wireless communication device according to an embodiment of the present disclosure. Referring to FIG. 5, a wireless communication device 200 includes a housing 41, a USB communication interface 43, and a wireless communication module 44. The USB communication interface 43 is provided on the housing 41 and is electrically connected to the wireless communication module 44. The USB communication interface 43 is configured to be electrically connected to a third device 300. The USB communication interface 43 of the wireless communication device 200 can be electrically connected to a USB communication interface 301 of the third device 300.

The wireless communication module 44 is configured to establish a wireless connection channel with an electronic device 100, the wireless connection channel being configured to transmit signals for a signal line (e.g., signal line DP/DM) of the wireless communication device 200 and a signal line (e.g., signal line DP/DM) of the electronic device 100; the wireless communication module 44 is further configured to establish a USB transmission channel upon successful establishment of the wireless connection channel; and the wireless communication module 44 is further configured to transmit USB data for the third device 300 or the electronic device via the USB transmission channel.

In an embodiment, the wireless communication device 200 further includes a power supply module, which can supply power to the wireless communication device 200 and includes at least one of a power module 42 or a wireless charging module 45. In an example, the power supply module of the wireless communication device includes the power module 42 and the wireless charging module 45, such that the wireless charging module 45 can be used to power the power module 42. The power module 42 may include at least one battery cell, as well as a voltage conversion circuit such as a charge pump or an inverter circuit, so as to adapt to a voltage conversion relationship between the battery cell and a load.

It should be noted that the wireless communication device 200 retains the USB communication interface, including but not limited to USB Type-C interface, USB Type-B interface, USB mini interface, and USB micro interface, which can be set according to specific scenarios. In this case, the USB bus can be inserted into the aforementioned USB communication interface, thereby establishing a physical connection between the third device 300 and the wireless communication device 200. The third device is a PC (Personal Computer) device or an OTG (On-The-Go) device. When the third device is a PC device, the electronic device is used as a Device, and when the third device is an OTG device, the electronic device is used as a HOST device.

It should be noted that in this embodiment, the wireless communication device 200 is used as a HUB device. The wireless communication device 200, as an intermediate device, can form a wireless connection channel, charging and discharging circuit, and USB transmission channel with the electronic device. On this basis, USB data transmission can be implemented to achieve the purpose of transmitting USB data from the third device 300 to the electronic device 100, transmitting USB data from the electronic device 100 to the third device 300, or exchanging data between the third device 300 and the electronic device 100.

In an embodiment, referring to FIG. 6, the wireless communication module 44 includes a wireless data transmission unit 51, a first differential signal line DP, and a second differential signal line DM. The wireless data transmission unit 51 is electrically connected to the first differential signal line DP and the second differential signal line DM, respectively.

The wireless data transmission unit 51 is configured to transmit a detection signal upon power-on, where the detection signal is configured to detect a peer transmission unit at a distance from the wireless data transmission unit 51 less than or equal to a preset distance threshold, the peer transmission unit being the wireless data transmission unit 21 of the electronic device. The wireless data transmission unit 51 is further configured to establish the wireless connection channel with the peer transmission unit in response to receiving a response signal returned by the peer transmission unit, where the wireless connection channel is configured to electrically connect the first differential signal line DP of the wireless communication module 44 to the first differential signal line DP of the electronic device 100, and to electrically connect the second differential signal line DM of the wireless communication module 44 to the second differential signal line DM of the electronic device 100.

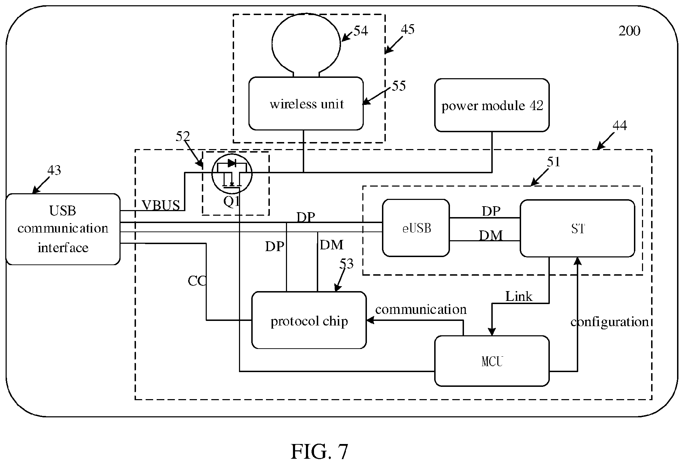

In an embodiment, referring to FIG. 7, the wireless data transmission unit 51 includes a wireless data transmission chip ST. The wireless data transmission chip ST has a first data pin electrically connected to the first differential signal line DP of the wireless communication module 44, and a second data pin electrically connected to the second differential signal line DM of the wireless communication module 44. In this way, signals and/or data transmitted by the first differential signal line DP and the second differential signal line DM can be sent to the wireless data transmission chip ST, or the first differential signal line DP and the second differential signal line DM can receive signals and/or data transmitted by the wireless data transmission chip ST.

It can be understood that the wireless data transmission chip ST of the wireless communication device and the wireless data transmission chip ST of the electronic device 100 match each other, and can transmit data to each other with matching parameters such as transmission rate, modulation mode, and transmit/receive power. The corresponding wireless data transmission chip ST can be selected according to a specific scenario, and the corresponding scheme falls within the scope of protection of the present disclosure.

In an example, with continued reference to FIG. 7, the wireless data transmission unit 51 further includes a level conversion chip eUSB. The level conversion chip eUSB includes: a first pin electrically connected to the first data pin of the wireless data transmission chip ST; a second pin electrically connected to the second data pin of the wireless data transmission chip ST; a third pin electrically connected to the first differential signal line DP; and a fourth pin electrically connected to the second differential signal line DM. The level conversion chip eUSB in this example can perform level conversion on the data transmitted by the wireless data transmission chip ST and/or the differential signal line DP/DM, thereby meeting the requirements of the wireless data transmission chip ST, the subsequent USB communication interface 43, or second controller MCU.

In an embodiment, the wireless communication device includes a control module. The control module is electrically connected to the wireless communication module and is configured to configure the wireless communication module and to control establishment of the USB transmission channel. The control module can be implemented as a separately provided controller, such as a microcontroller, a digital processing chip, or a circuit with control functions. The control module includes a second controller. In order to minimize modifications to the structure of the wireless communication device, the second controller can also be implemented as a processor MCU of the wireless communication device. Corresponding schemes, which can realize corresponding functions, fall within the scope of protection of the present disclosure.

For convenience of description, the subsequent embodiments will be described with the second controller implemented as a processor MCU, for example. In an embodiment, with continued reference to FIG. 6 or FIG. 7, the second controller MCU includes: a first communication pin electrically connected to the wireless data transmission chip ST; and a configuration pin electrically connected to the wireless data transmission chip ST. In this way, the second controller MCU can configure the wireless data transmission chip ST via the configuration pin, such as an operating frequency, modulation mode, and transmit/receive power of the wireless data transmission chip ST. The second controller MCU can also receive, via the first communication pin, a channel establishment success signal Link, which is generated by the wireless data transmission chip ST upon successful establishment of the wireless connection channel.

In an embodiment, the second controller further includes a USB mode trigger pin, the wireless data transmission chip further includes a USB mode trigger pin, and the USB mode trigger pin of the second controller is electrically connected to the USB mode trigger pin of the wireless data transmission chip. The wireless data transmission chip is configured to output a USB mode trigger signal via the USB mode trigger pin thereof in response to detecting a peer wireless data transmission chip. The second controller is configured to establish the USB transmission channel with the wireless data transmission chip in response to receiving the USB mode trigger signal, to transmit the USB data via the USB transmission channel. In this way, when the electronic device is placed on or near the wireless communication device, the second controller can be triggered by the wireless data transmission chip ST to establish the USB transmission channel directly without the need for the power management unit PMIC to establish the USB transmission channel, minimizing the modifications to the wireless communication device.

In an embodiment, with continued reference to FIG. 6 or FIG. 7, the wireless communication device further includes a second switching unit 52. The second switching unit 52 includes: a control pin electrically connected to the second controller MCU; a first terminal electrically connected to a power pin of the USB communication interface 43; and a second terminal electrically connected to the power module 42.

In an example, the second switching unit 52 may be implemented as an N-type MOS transistor, also known as an NMOS transistor. The NMOS transistor includes a body diode.

When the USB communication interface 43 is inserted into the third device, which is a PC device, a preset voltage signal at the first terminal of the second switching unit 52 can be transmitted to the second terminal of the second switching unit 52 via the body diode as described above, and finally reach the power module 42, i.e., the third device 300 supplies power to the wireless communication device 200.

When the USB communication interface 43 is inserted into the third device which is an OTG device, the wireless communication device 200 can supply power to the OTG device, or the electronic device can first supply power to the wireless communication device 200 and then the wireless communication device 200 can supply power to the OTG device. For example, in the case where the electronic device supplies power to the OTG device, the wireless charging module 45 of the wireless communication device 200 can establish a wireless charging and discharging circuit with the wireless charging module 13 of the electronic device. The establishment of the wireless charging and discharging circuit can refer to steps of the charging protocol, such as the Qi charging protocol, and is not limited herein. At this point, the wireless charging module 45 of the wireless communication device 200 can receive wireless power and output it to the power module 42. The power module 42, after charging, can output a corresponding voltage of, for example, 3.3V or 1.8V, at which point various components of the wireless communication device 200 begin to be powered on and operate. Upon detecting successful establishment of the wireless connection channel and successful establishment of the charging and discharging circuit (or detecting a channel establishment success signal Link), the second controller MCU can output a second switching control signal. The second switching unit 52 switches to an on state upon receiving the second switching control signal, such that the first terminal of the second switching unit 52 outputs a preset voltage signal to the power pin of the USB communication interface. In other words, the wireless communication device 200 supplies power to the third device 300 via the USB communication interface 43.

In an embodiment, with continued reference to FIG. 6 or FIG. 7, the wireless communication module 44 further includes a protocol chip 53. The protocol chip 53 includes: a first data pin electrically connected to the first differential signal line DP; a second data pin electrically connected to the second differential signal line DM; a configuration pin electrically connected to a configuration pin of the USB communication interface 43; and a communication pin electrically connected to a second communication pin of the second controller MCU. In this way, the protocol chip 53 can communicate with the third device 300 via the USB communication interface 43, thereby identifying whether the third device is a PC device or an OTG device, facilitating communication between the wireless communication device 200 and the electronic device 100.

In an embodiment, with continued reference to FIG. 6 and FIG. 7, the wireless charging module 45 includes a wireless coil 54 and a wireless unit 55. The wireless coil 54 is electrically connected to the wireless unit 55. The wireless unit 55 is electrically connected to a second pin (i.e., the second terminal) of the second switching unit 52 in the wireless communication module 44 and the power module 42. In this way, the wireless unit 55 can output wireless power to the wireless coil 54 or receive wireless power from the wireless coil 54 based on configuration data. In other words, the second pin of the second switching unit 52 is electrically connected to the power module 42 and the wireless unit 55, respectively. When powered by the power module 42 and/or the wireless unit 55, the second pin of the second switching unit 52 is always in a high-level state, preparing for the output of the preset voltage signal.

It can be understood that when the power module 42 of the wireless communication device 200 completes or stops discharging, the wireless communication device 200 can be powered by the electronic device 100 via the wireless charging module 45. The process of establishing a connection for wireless charging can be found in the related art, and will not be repeated herein.

Thus, the wireless communication device 200 according to this embodiment can transmit the USB data with the electronic device wirelessly, eliminating the need to provide a data transmission interface for the electronic device, and avoiding failure to transmit the USB data due to corrosion or damage to the data transmission interface, which is conducive to improving the user experience. Moreover, the elimination of a data transmission interface from the electronic device facilitates the realization of a holeless electronic device.

A process of transmitting the USB data when a USB Type-C interface is removed from an electronic device will be described based on the electronic device 100 shown in FIGS. 1 to 4 and the wireless communication device 200 shown in FIGS. 5 to 7. The process includes: Scenario 1, where the electronic device 100 serves as a Device and the third device 300 is a PC device; and Scenario 2, where the electronic device 100 serves as a HOST device and the third device 300 is an OTG device.

### Scenario 1

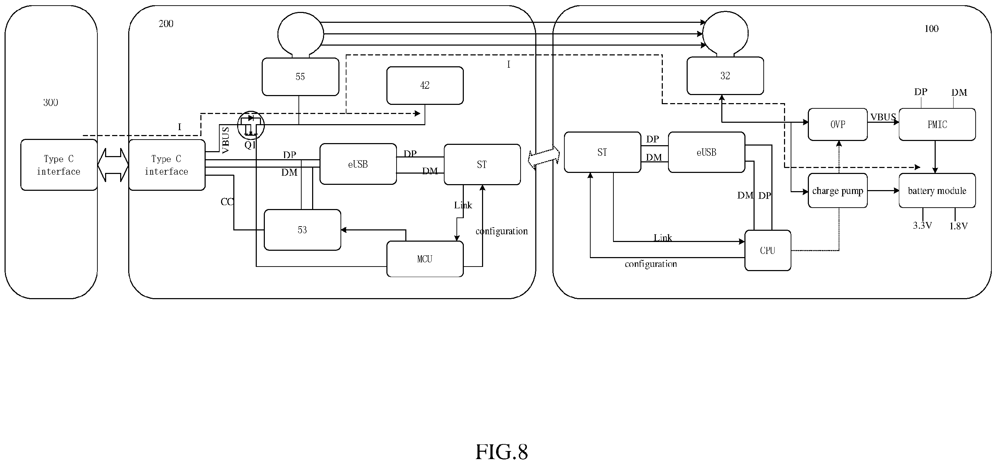

Referring to FIG. 8, the Type-C interface of the third device 300 is inserted into the Type-C interface of the wireless communication device 200. With the Type-C interfaces inserted, the third device 300 can supply power to the wireless communication device 200 with a power supply path of the third device 300, the Type-C interface of the third device 300, (the power pin of) the Type-C interface of the wireless communication device 200, the body diode of a switching device Q 1 of the second switching unit 52, and the power module 42.

After the power module 42 of the wireless communication device 200 is powered, the power module 42 can supply power to various components of the wireless communication device 200, such as the wireless data transmission chip ST, the second controller MCU, and the protocol chip. The wireless data transmission chip ST transmits a detection signal upon power-on, the detection signal being configured to detect a peer transmission unit at a distance from the wireless data transmission chip ST less than or equal to a preset distance threshold, where the peer transmission unit refers to the wireless data transmission chip ST of the electronic device.

The wireless charging module 45 of the wireless communication device 200 may charge the battery module of the electronic device 100 via the wireless charging module 13 of the electronic device. Alternatively, the electronic device 100 may be powered directly by the battery module. The battery module may supply power to various units of the electronic device, such as the wireless data transmission chip ST, the first controller CPU, and the power management unit PMIC. The wireless data transmission chip ST transmits a detection signal upon power-on, the detection signal including at least one pulse, and being configured to detect a peer transmission unit at a distance from the wireless data transmission chip ST less than or equal to a preset distance threshold, where the peer transmission unit refers to the wireless data transmission chip ST of the wireless communication device.

The above two wireless data transmission chips ST follow a preset processing logic. One of the wireless data transmission chips ST, upon receiving the above-described detection signal, may return a response signal, and then, the two wireless data transmission chips ST may engage in handshake communication in accordance with a preset handshake protocol. The two wireless data transmission chips ST establish a wireless connection channel therebetween after the handshake function. Finally, the wireless data transmission chip ST of the electronic device 100 sends a channel establishment success signal Link to the first controller CPU, and the wireless data transmission chip ST of the wireless communication device 200 sends a channel establishment success signal Link to the second controller MCU.

Upon receiving the channel establishment success signal Link, the first controller CPU of the electronic device 100 may output a first switching control signal to the first switching unit, where the first switching unit is implemented as an over-voltage protection chip OVP, or is implemented as a power switching device (e.g., a MOSFET device) in some examples. At this time, the first switching unit can enable the second terminal to output the preset voltage signal VBUS. The power management unit PMIC initiates USB protocol identification when detecting the preset voltage signal at the power pin, where signals for the USB protocol identification process are transmitted over the wireless connection channel. The USB protocol identification process has been illustrated in the description of the power management unit PMIC, can be found in the foregoing for details, and will not be repeated herein. In this way, a USB transmission channel can be established between the electronic device and the third device.

The wireless communication device 200, as an intermediate device, may forward data from the third device 300 and the electronic device 100 to ensure the transmission efficiency of the wireless connection channel. For example, the USB handshake signal output by the wireless data transmission chip ST of the electronic device may be received by the wireless data transmission chip ST of the wireless communication device 200, then sent to the Type-C interface via the first differential signal line DP and the second differential signal line DM after level conversion via the level conversion chip eUSB, and finally reach the third device 300. For another example, the USB handshake response signal from the third device 300 can be output to the Type-C interface of the wireless communication device 200 via the Type-C interface thereof, sent to the level conversion chip eUSB via the Type-C interface of the wireless communication device 200, and then sent to the wireless data transmission chip ST of the electronic device via the wireless data transmission chip ST after level conversion via the level conversion chip eUSBs. The level conversion chip eUSB of the electronic device may send the USB handshake response signal to the power management unit PMIC via the first differential signal line DP and the second differential signal line DM.

After the USB transmission channel is established between the third device 300 and the electronic device 100, the data from the electronic device 100 and/or the data from the third device 300 can be sent to each other, achieving the effect of transmitting the USB data.

### Scenario 2

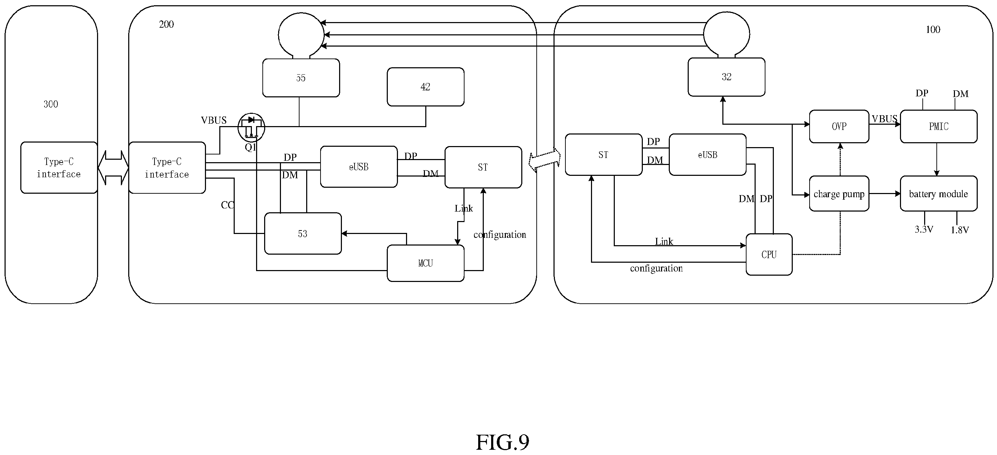

Referring to FIG. 9, the Type-C interface of the third device 300 is inserted into the Type-C interface of the wireless communication device 200. With the Type-C interfaces inserted, the third device 300, as an OTG device, needs to be powered. For example, in the case where the electronic device supplies power to the OTG device, a power supply path is the battery module of the electronic device 100, the wireless unit 32 of the electronic device 100, the wireless coil of the electronic device 100, the wireless coil of the wireless communication device 200, the wireless unit 55 of the wireless communication device 200, and the power module 42.

After the power module 42 of the wireless communication device 200 is charged, the wireless communication device 200 begins to operate. The wireless data transmission chip ST of the wireless communication device 200 transmits a detection signal. In addition, the wireless data transmission chip ST of the electronic device transmits a detection signal. The two wireless data transmission chips ST can establish a wireless connection channel therebetween. The first controller CPU of the electronic device 100 and the second controller MCU of the wireless communication device 200 may each receive the channel establishment success signal Link.

After receiving the channel establishment success signal Link, the second controller MCU of the wireless communication device 200 may output a second switching control signal to enable the switching device Q1 to switch to an on state, at which time the power module of the wireless communication device 200 may supply power to the third device 300 via the switching device Q1 and the power pin of the Type-C interface.

The third device 300 may initiate USB protocol identification, where signals for the USB protocol identification process are transmitted over the wireless connection channel, and a USB transmission channel may be established between the third device 300 and the electronic device 100.

After the USB transmission channel is established between the third device 300 and the electronic device 100, the data from the electronic device 100 and/or the data from the third device 300 can be sent to each other, achieving the effect of transmitting the USB data.

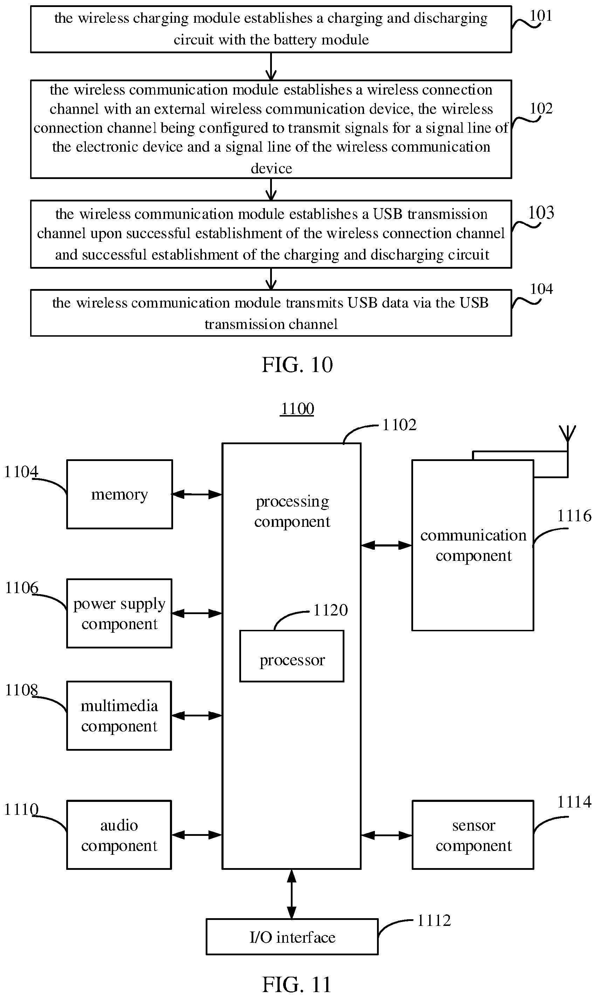

On the basis of an electronic device according to embodiments of the present disclosure, embodiments of the present disclosure further provide a data transmission method, applicable to an electronic device, which includes a housing, a battery module, a wireless charging module, and a wireless communication module, the wireless charging module and the wireless communication module being provided within the housing, the battery module being electrically connected to the wireless charging module and the wireless communication module, and the housing being provided with no data transmission interface. Referring to FIG. 10, the method includes steps 101 to 104. At step 101, the wireless charging module establishes a charging and discharging circuit with the battery module. At step 102, the wireless communication module establishes a wireless connection channel with an external wireless communication device, the wireless connection channel being configured to transmit signals for a signal line of the electronic device and a signal line of the wireless communication device. At step 103, the wireless communication module establishes a USB transmission channel upon successful establishment of the wireless connection channel and successful establishment of the charging and discharging circuit. At step 104, the wireless communication module transmits USB data via the USB transmission channel.

In an embodiment, the wireless communication module establishing the wireless connection channel with the external wireless communication device, includes: transmitting a detection signal upon power-on, the detection signal being configured to detect a peer transmission unit at a distance from the wireless communication module less than or equal to a preset distance threshold; and establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit.

In an embodiment, the wireless communication module establishing the USB transmission channel upon the successful establishment of the wireless connection channel and the successful establishment of the charging and discharging circuit, includes: outputting a first switching control signal upon the successful establishment of the wireless connection channel and the successful establishment of the charging and discharging circuit; switching a first switching unit of the electronic device to an on state upon receiving the first switching control signal to enable a second terminal of the first switching unit to output a preset voltage signal; and transmitting and receiving signals via the wireless connection channel to establish the USB transmission channel in response to detecting the preset voltage signal by a power pin.

It should be noted that the data transmission method according to this embodiment has been embodied in the description of the operating process of the electronic device, which can be found in the contents of the above embodiments, and will not be repeated herein.

On the basis of a wireless communication device according to embodiments of the present disclosure, embodiments of the present disclosure further provide a data transmission method, applicable to a wireless communication device, which includes a housing, a power module, a USB communication interface, a wireless communication module, and a wireless charging module, the USB communication interface being provided on the housing and electrically connected to the wireless communication module, the wireless charging module being electrically connected to the wireless communication module, the power module being electrically connected to the wireless communication module and the wireless charging module, and the USB communication interface being electrically connected to a third device which is a PC device or an OTG device. The method includes: establishing, by the wireless charging module, a charging and discharging circuit; establishing, by the wireless communication module, a wireless connection channel with an electronic device, the wireless connection channel being configured to electrically connect a signal line of the wireless communication device and a signal line of the electronic device; establishing, by the wireless communication module, a USB transmission channel upon successful establishment of the wireless connection channel and successful establishment of the charging and discharging circuit; and transmitting, by the wireless communication module, USB data for the third device or the electronic device via the USB transmission channel.

In an embodiment, establishing, by the wireless communication module, the wireless connection channel with the electronic device, includes: transmitting a detection signal upon power-on, the detection signal being configured to detect a peer transmission unit at a distance from the wireless communication module less than or equal to a preset distance threshold, where the peer transmission unit is a wireless data transmission unit of the electronic device; and establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit.

In an embodiment, establishing, by the wireless communication module, the USB transmission channel upon the successful establishment of the wireless connection channel and the successful establishment of the charging and discharging circuit, includes: outputting a second switching control signal upon the successful establishment of the wireless connection channel and the successful establishment of the charging and discharging circuit; switching a second switching unit of the wireless communication device to an on state upon receiving the second switching control signal to enable a first terminal of the second switching unit to output a preset voltage signal to a power pin of the USB communication interface; and transmitting a USB handshake signal via the wireless connection channel to enable the electronic device to establish the USB transmission channel with the third device.

It should be noted that the data transmission method according to this embodiment has been embodied in the description of the operating process of the wireless communication device, which can be found in the contents of the above embodiments, and will not be repeated herein.

FIG. 11 is a block diagram illustrating an electronic device according to an exemplary embodiment. For example, the electronic device 1100 may be a smart phone, a computer, a digital broadcast terminal, a tablet device, a medical device, a fitness device, a personal digital assistant, and the like.

Referring to FIG. 11, the electronic device 1100 may include one or more of a processing component 1102, a memory 1104, a power supply component 1106, a multimedia component 1108, an audio component 1110, an input/output (I/O) interface 1112, a sensor component 1114, and a communication component 1116.

The processing component 1102 generally controls overall operations of the electronic device 1100, such as operations associated with display, a telephone call, data communication, a camera operation, and a record operation. The processing component 1102 may include one or more processors 1120 for executing computer programs. Further, the processing component 1102 may include one or more modules to facilitate interaction between the processing component 1102 and another component. For example, the processing component 1102 may include a multimedia module to facilitate interaction between the multimedia component 1108 and the processing component 1102.

The memory 1104 is configured to store various types of data to support operations at the electronic device 1100. Examples of such data include computer programs for any application or method operated on the electronic device 1100, contact data, phonebook data, messages, pictures, videos, and so on. The memory 1104 may be implemented by any type of volatile or non-volatile storage device or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic disk, or a compact disk.

The power supply component 1106 supplies power to various components of the electronic device 1100. The power supply component 1106 may include a power management system, one or more power supplies, and other components associated with generating, managing and distributing power for the electronic device 1100.

The multimedia component 1108 includes a screen for providing an output interface between the electronic device 1100 and a target object.

In some embodiments, the screen may include a liquid crystal display (LCD) and a touch panel (TP). If the screen includes a touch panel, the screen may be implemented as a touch screen to receive input information from a target object. The touch panel includes one or more touch sensors to sense touches, swipes, and gestures on the touch panel. The touch sensor may not only sense a boundary of a touch or swipe action, but also detect duration and pressure associated with the touch or swipe action.

The audio component 1110 is configured to output and/or input audio file information. For example, the audio component 1110 includes a microphone (MIC) configured to receive external audio file information when the electronic device 1100 is in an operation mode, such as a call mode, a record mode, and a voice recognition mode. The received audio file information may be further stored in the memory 1104 or transmitted via the communication component 1116. In some embodiments, the audio component 1110 further includes a speaker for outputting the audio file information.

The I/O interface 1112 provides an interface between the processing component 1102 and a peripheral interface module. The peripheral interface module may be a keyboard, a click wheel, a button, or the like.

The sensor component 1114 includes one or more sensors for providing a state assessment in various aspects for the electronic device 1100. For example, the sensor component 1114 may detect an on/off state of the electronic device 1100, and relative positioning between components, which are, for example, a display and a keypad of the electronic device 1100. The sensor component 1114 may also detect a change in position of the electronic device 1100 or a component of the electronic device 1100, the presence or absence of a touch of a target object on the electronic device 1100, an orientation or acceleration/deceleration of the electronic device 1100, and a change in temperature of the electronic device 1100. In this example, the sensor component 1114 may include a magnetic sensor, a gyroscope, and a magnetic field sensor, and may also include an inertial sensor, an image sensor, and the like, where the magnetic field sensor includes at least one of a Hall sensor, a thin-film magnetoresistive sensor, or a magnetic liquid acceleration sensor.

The communication component 1116 is configured to facilitate wired or wireless communication between the electronic device 1100 and another device. The electronic device 1100 may access a wireless network based on a communication standard, such as WiFi, 2G, 3G, 4G, 5G, or a combination thereof. In an exemplary embodiment, the communication component 1116 receives broadcast information or broadcast-related information from an external broadcast management system via a broadcast channel. In an exemplary embodiment, the communication component 1116 further includes a Near Field Communication (NFC) module for promoting short-range communication. For example, the NFC module may be implemented based on radio frequency identification (RFID) technology, infrared data association (IrDA) technology, ultra-wideband (UWB) technology, Bluetooth (BT) technology, and other technologies.

In an exemplary embodiment, the electronic device 1100 may be implemented by one or more of application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components.

Other embodiments of the present disclosure will readily occur to those skilled in the art upon consideration of the specification and practice of the disclosure disclosed herein. The present disclosure is intended to cover any variations, uses, or adaptations of the present disclosure that follow the general principles of the present disclosure and include common general knowledge or conventional technical means in the art not disclosed herein. The specification and embodiments are to be considered exemplary only, with a true scope of the present disclosure being indicated by the following claims.

## Claims

1. An electronic device, **characterized in that**, the electronic device comprises a housing and a wireless communication module, the wireless communication module being provided within the housing, and the housing being provided with no data transmission interface;
wherein the wireless communication module is configured to:
establish a wireless connection channel with an external wireless communication device, the wireless connection channel being configured to transmit signals for a signal line of the electronic device and a signal line of the wireless communication device;
establish a USB transmission channel upon successful establishment of the wireless connection channel; and
transmit USB data via the USB transmission channel.

2. The electronic device of claim 1, wherein the wireless communication module comprises a wireless data transmission unit, a first differential signal line, and a second differential signal line, the wireless data transmission unit being electrically connected to the first differential signal line and the second differential signal line,
wherein the wireless data transmission unit is configured to transmit a detection signal for detecting a peer transmission unit at a distance from the wireless data transmission unit less than or equal to a preset distance threshold; and
the wireless data transmission unit is further configured to establish the wireless connection channel with the peer transmission unit in response to receiving a response signal returned by the peer transmission unit, the wireless connection channel being configured to transmit and receive signals for the first differential signal line of the wireless communication module and a first differential signal line of the peer transmission unit, and to transmit and receive signals for the second differential signal line of the wireless communication module and a second differential signal line of the peer transmission unit,
wherein preferably, the wireless data transmission unit comprises a wireless data transmission chip, which has a first data pin electrically connected to the first differential signal line of the wireless communication module, and a second data pin electrically connected to the second differential signal line of the wireless communication module.

3. The electronic device of claim 2, wherein the wireless data transmission unit further comprises a level conversion chip, which has a first pin electrically connected to the first data pin of the wireless data transmission chip, a second pin electrically connected to the second data pin of the wireless data transmission chip, a third pin electrically connected to the first differential signal line of the wireless communication module, and a fourth pin electrically connected to the second differential signal line of the wireless communication module,
or
the electronic device further comprises a control module electrically connected to the wireless communication module, and configured to configure the wireless communication module and to control establishment of the USB transmission channel.

4. The electronic device of claim 3, wherein the control module comprises a first controller, which has a first data pin electrically connected to the first differential signal line of the wireless communication module, a second data pin electrically connected to the second differential signal line of the wireless communication module, a first communication pin electrically connected to the wireless data transmission chip, and a configuration pin electrically connected to the wireless data transmission chip,
wherein preferably, the first controller further comprises a USB mode trigger pin, the wireless data transmission chip further comprises a USB mode trigger pin, and the USB mode trigger pin of the first controller is electrically connected to the USB mode trigger pin of the wireless data transmission chip;
the wireless data transmission chip is configured to output a USB mode trigger signal via the USB mode trigger pin thereof in response to detecting a peer wireless data transmission chip; and
the first controller is configured to establish the USB transmission channel with the wireless data transmission chip in response to receiving the USB mode trigger signal, to transmit the USB data via the USB transmission channel,
or
preferably, the electronic device further comprises a first switching unit, which has a control pin electrically connected to the first controller, and a first terminal electrically connected to a power supply module of the electronic device;
the first controller is further configured to output a first switching control signal upon the successful establishment of the wireless connection channel and successful establishment of a charging and discharging circuit; and
the first switching unit is configured to switch to an on state upon receiving the first switching control signal to enable a second terminal of the first switching unit to output a preset voltage signal.

5. The electronic device of claim 4, further comprising a voltage adjustment unit, which has a first input terminal electrically connected to the second terminal of the first switching unit, and a second input terminal electrically connected to the power supply module, the voltage adjustment unit being configured to adjust the preset voltage signal output from the first switching unit,
or
wherein the electronic device further comprises a power management unit, which has a power pin electrically connected to the second terminal of the first switching unit, a first data pin electrically connected to the first differential signal line of the wireless communication module, and a second data pin electrically connected to the second differential signal line of the wireless communication module; and
the power management unit is configured to transmit and receive signals via the wireless connection channel to establish the USB transmission channel in response to detecting the preset voltage signal by the power pin.

6. A wireless communication device, **characterized in that**, the wireless communication device comprises a housing, a USB communication interface and a wireless communication module, the USB communication interface being provided on the housing and electrically connected to the wireless communication module, and the USB communication interface being configured to be electrically connected to a third device which is a PC device or an OTG device,
wherein the wireless communication module is configured to:
establish a wireless connection channel with an electronic device, the wireless connection channel being configured to transmit and receive signals for a signal line of the wireless communication device and a signal line of the electronic device;
establish a USB transmission channel upon successful establishment of the wireless connection channel; and
transmit USB data for the third device or the electronic device via the USB transmission channel.

7. The wireless communication device of claim 6, wherein the wireless communication module comprises a wireless data transmission unit, a first differential signal line, and a second differential signal line, the wireless data transmission unit being electrically connected to the first differential signal line and the second differential signal line,
wherein the wireless data transmission unit is configured to transmit a detection signal for detecting a peer transmission unit at a distance from the wireless data transmission unit less than or equal to a preset distance threshold, the peer transmission unit being comprised in the electronic device; and
the wireless data transmission unit is further configured to establish the wireless connection channel with the peer transmission unit in response to receiving a response signal returned by the peer transmission unit, the wireless connection channel being configured to transmit and receive signals for the first differential signal line of the wireless communication module and a first differential signal line of the peer transmission unit, and to transmit and receive signals for the second differential signal line of the wireless communication module and a second differential signal line of the peer transmission unit,
wherein preferably, the wireless data transmission unit comprises a wireless data transmission chip, which has a first data pin electrically connected to the first differential signal line of the wireless communication module, and a second data pin electrically connected to the second differential signal line of the wireless communication module.

8. The wireless communication device of claim 7, wherein the wireless data transmission unit further comprises a level conversion chip, which has a first pin electrically connected to the first data pin of the wireless data transmission chip, a second pin electrically connected to the second data pin of the wireless data transmission chip, a third pin electrically connected to the first differential signal line of the wireless communication module, and a fourth pin electrically connected to the second differential signal line of the wireless communication module,
or
the wireless communication device further comprises a control module electrically connected to the wireless communication module, and configured to configure the wireless communication module and to control establishment of the USB transmission channel.

9. The wireless communication device of claim 8, wherein the control module comprises a second controller, which has a first communication pin electrically connected to the wireless data transmission chip, and a configuration pin electrically connected to the wireless data transmission chip,
wherein preferably, the wireless communication module further comprises a second switching unit, which has a control pin electrically connected to the second controller, a first terminal electrically connected to a power pin of the USB communication interface, and a second terminal electrically connected to a power module of the wireless communication device;
the second controller is further configured to output a second switching control signal upon the successful establishment of the wireless connection channel and successful establishment of a charging and discharging circuit; and
the second switching unit is configured to switch to an on state upon receiving the second switching control signal to enable the first terminal of the second switching unit to output a preset voltage signal to the power pin of the USB communication interface,
more preferably, the second switching unit is further configured to transmit the preset voltage signal at the first terminal of the second switching unit to the power module.

10. The wireless communication device of claim 9, wherein the second controller further comprises a USB mode trigger pin, the wireless data transmission chip further comprises a USB mode trigger pin, and the USB mode trigger pin of the second controller is electrically connected to the USB mode trigger pin of the wireless data transmission chip;
the wireless data transmission chip is configured to output a USB mode trigger signal via the USB mode trigger pin thereof in response to detecting a peer wireless data transmission chip; and
the second controller is configured to establish the USB transmission channel with the wireless data transmission chip in response to receiving the USB mode trigger signal, to transmit the USB data via the USB transmission channel,
or
wherein the wireless communication module further comprises a protocol chip, which has a first data pin electrically connected to the first differential signal line of the wireless communication module, a second data pin electrically connected to the second differential signal line of the wireless communication module, a configuration pin electrically connected to a configuration pin of the USB communication interface, and a communication pin electrically connected to a second communication pin of the second controller.

11. The wireless communication device of any one of claims 6 - 10, further comprising a power supply module, which comprises at least one of a wireless charging module or a power module, the power supply module being electrically connected to the wireless communication module to supply power to the wireless communication module,
wherein preferably, the wireless charging module comprises a wireless coil and a wireless unit, the wireless coil being electrically connected to the wireless unit, and the wireless unit being electrically connected to a second pin of a second switching unit in the wireless communication module and the power module.

12. A data transmission method, applicable to an electronic device, which comprises a housing and a wireless communication module, the wireless communication module being provided within the housing, and the housing being provided with no data transmission interface;
the method comprising:
establishing, by the wireless communication module, a wireless connection channel with an external wireless communication device, the wireless connection channel being configured to transmit signals for a signal line of the electronic device and a signal line of the wireless communication device;
establishing, by the wireless communication module, a USB transmission channel upon successful establishment of the wireless connection channel; and
transmitting, by the wireless communication module, USB data via the USB transmission channel.

13. The method of claim 12, wherein establishing, by the wireless communication module, the wireless connection channel with the external wireless communication device, comprises:
transmitting a detection signal for detecting a peer transmission unit at a distance from the wireless communication module less than or equal to a preset distance threshold; and
establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit,
or
wherein establishing, by the wireless communication module, the USB transmission channel upon the successful establishment of the wireless connection channel, comprises:
outputting a first switching control signal upon the successful establishment of the wireless connection channel and successful establishment of a charging and discharging circuit;
switching a first switching unit of the electronic device to an on state upon receiving the first switching control signal to enable a second terminal of the first switching unit to output a preset voltage signal; and
transmitting and receiving signals via the wireless connection channel to establish the USB transmission channel in response to detecting the preset voltage signal by a power pin.

14. A data transmission method, applicable to a wireless communication device, which comprises a housing, a USB communication interface and a wireless communication module, the USB communication interface being provided on the housing and electrically connected to the wireless communication module, and the USB communication interface being configured to be electrically connected to a third device which is a PC device or an OTG device,
the method comprising:
establishing, by the wireless communication module, a wireless connection channel with an electronic device, the wireless connection channel being configured to electrically connect a signal line of the wireless communication device and a signal line of the electronic device;
establishing, by the wireless communication module, a USB transmission channel upon successful establishment of the wireless connection channel; and
transmitting, by the wireless communication module, USB data for the third device or the electronic device via the USB transmission channel.

15. The method of claim 14, wherein establishing, by the wireless communication module, the wireless connection channel with the electronic device, comprises:
transmitting a detection signal for detecting a peer transmission unit at a distance from the wireless communication module less than or equal to a preset distance threshold, the peer transmission unit being a wireless data transmission unit of the electronic device; and
establishing the wireless connection channel with the peer transmission unit in response to receiving a response signal returned by the peer transmission unit, the wireless connection channel being configured to transmit and receive signals for a first differential signal line of the wireless communication module and a first differential signal line of the peer transmission unit, and to transmit and receive signals for a second differential signal line of the wireless communication module and a second differential signal line of the peer transmission unit,
or
wherein establishing, by the wireless communication module, the USB transmission channel upon the successful establishment of the wireless connection channel, comprises:
outputting a second switching control signal upon the successful establishment of the wireless connection channel and successful establishment of a charging and discharging circuit;
switching a second switching unit of the wireless communication device to an on state upon receiving the second switching control signal to enable a first terminal of the second switching unit to output a preset voltage signal to a power pin of the USB communication interface; and
transmitting a USB handshake signal via the wireless connection channel to enable the electronic device to establish the USB transmission channel with the third device.
